# EUROPÄISCHE PATENTSCHRIFT

(11) **EP 1 357 784 B1**
(45) Veröffentlichungstag und Bekanntmachung des Hinweises auf die Patenterteilung: **29.11.2006**
(21) Anmeldenummer: 02700154.4
(22) Anmeldetag: 17.01.2002
(51) Int. Cl.: A01D 45/02

(54) **AUSRÄUMER FÜR DIE SCHNEID- UND FÖRDERVORRICHTUNGEN EINES SCHNEIDWERKS**
CLEARING ELEMENT FOR THE CUTTING AND TRANSPORT DEVICES OF A CUTTING SYSTEM
ELEMENTS D'EVACUATION POUR DISPOSITIFS DE COUPE ET DE TRANSPORT D'UN SYSTEME DE COUPE

(30) Priorität: 07.02.2001 DE 10105439
(43) Veröffentlichungstag der Anmeldung: 05.11.2003
(73) Patentinhaber: CNH Belgium N.V., 8210 Zedelgem (BE)
(72) Erfinder: VON ALLWÖRDEN, Wilhelm, 01326 Dresden (DE); PORSCHE, Andreas, 01169 Dresden (DE); BERNHARDT, Gerd, 01728 Hänichen (DE)
(74) Vertreter: Feldkamp, Rainer
(86) Internationale Anmeldenummer: PCT/DE2002/000135
(87) Internationale Veröffentlichungsnummer: WO 2002/062128

(56) Entgegenhaltungen:
- WO-A-01/05217
- DE-A- 3 929 349
- DE-A- 19 527 607
- DE-U- 9 109 490

## Beschreibung

Die Erfindung betrifft einen Ausräumer für die Schneid- und Fördervorrichtungen eines Schneidwerks zur Ernte von reihenunabhängig als auch in Reihen angebautem stängeligen Halmgut, insbesondere Mais, mit den Merkmalen nach dem Oberbegriff des Patentanspruchs 1.

Derartige Schneidwerke haben heute aufgrund der hohen Leistungsfähigkeit der von ihnen mit Halmgut beschickten Feldhäcksler bereits Arbeitsbreiten von mehr als 6 Metern erreicht. Aus diesem Grunde sind innerhalb des Schneidwerks große Emtegutmassen bis zur Einzugsöffnung des Hächselaggregates des Feldhäckslers zu befördern, wozu eine große Förderleistung der nebeneinander im Schneidwerk angeordneten und um annähernd vertikale Achsen rotierenden Fördervorrichtungen notwendig ist. Diese sind deshalb mit langen und in mehreren Ebenen übereinander angeordneten Förderzinken ausgestattet, zwischen denen sich tiefe Fördertaschen zur Aufnahme der abgeschnittenen Halmgutstängel befinden. Dadurch ist aber ein Problem entstanden, weil zur Vermeidung von Verstopfungen im Schneidwerk alle Halmgutstängel aus den tiefen Fördertaschen wieder heraus gebracht werden müssen, damit diese entweder an die benachbarte Schneid- und Fördervorrichtung bzw. an das Häckselaggregat weitergeleitet werden können. Für diese wichtige Funktion besitzen derartige Schneidwerke sogenannte Ausräumer, von denen nachfolgend die wichtigsten erläutert werden.

Ein gattungsgemäßes Schneidwerk mit Ausräumern ist aus der EP 0 286 882 A2 bekannt. Hier sind Schneid- und Fördervorrichtungen vorhanden, die aus rotierenden kegelstumpfförmigen Hohlkörpern bestehen, die im unteren Teil mit einer mit zahlreichen Messern versehenen Schneidscheibe und darüber mit in mehreren Ebenen koaxial umlaufenden Förderzinken ausgestattet sind. Damit die Förderzinken die Halmgutstängel während des Umlaufs nicht verlieren, sind deren Spitzen gegenüber der Radialen in Umlaufrichtung nach vom geneigt. Um die Halmgutstängel dennoch aus den Fördertaschen zwischen den Förderzinken heraus zu bekommen, sind an den Abgabestellen der Schneid- und Fördervorrichtungen zu diesen gegenläufig rotierende und mit Fingern besetzte Ausräumer angeordnet.

Der Nachteil dieses Schneidwerks ist, dass die Finger in dem Bereich, in dem sie mit den Förderzinken zusammenwirken, eine Geschwindigkeitskomponente haben, die auf die Förderzinken hin gerichtet ist. Das hat zur Folge, dass die Halmgutstängel nur unter Zwang aus den Fördertaschen ausgeräumt werden, was eine Funktionsbeeinträchtigung darstellt und mit einer erhöhten Leistungsaufnahme verbunden ist. Außerdem ist zu bemängeln, dass man in der Formgebung für die Förderzinken und demzufolge auch für die Fördertaschen zum Zwecke einer sicheren Förderung der Halmgutstängel während ihres Umlaufs sehr eingeschränkt ist.

In der DE 44 41 074 C2 ist eine zweite Ausführungsmöglichkeit für Ausräumer für die Schneid- und Fördervorrichtungen an Schneidwerken zur Ernte von Mais beschrieben, deren Grundprinzip durch die Lösungen nach der DE 195 23 255 A1, der DE 195 27 607 C2, der DE 195 35 453 A1, der DE 196 28 195 A1 und der DE 197 06 332 A1 in Details verändert wurde. Hier ist am Rahmen des Schneidwerks an einer annähernd vertikal ausgerichteten Welle eine angetriebene Schneidscheibe gelagert. Koaxial zur Schneidscheibe sind zwei ebenfalls angetriebene Förderscheiben gelagert, die an ihrem Umfang mit einer Vielzahl von nach außen offenen Fördertaschen besetzt ist, zwischen denen jeweils ein Förderzinken stehen bleibt. Zwischen den Förderscheiben sind mittels eines am Schneidwerk befestigten Getriebes zwei um eine etwa senkrechte Achse dreh- und antreibbar gelagerte Ausräumer angeordnet. Sie sind scheibenförmig ausgebildet und haben an ihrem Umfang eine Vielzahl von Zähnen, die auf einem Teil ihres Umlaufs die offenen Fördertaschen in den Förderscheiben völlig überdekken. Die Ausräumer rotieren dabei in der gleichen Richtung wie die Förderscheiben, wobei ihre Umfangsgeschwindigkeit gleich oder etwas größer als die der Förderscheiben ist. Die Halmgutstängel werden so lange in den Fördertaschen in der Umlaufrichtung der Förderscheiben befördert, bis sie in den Bereich der Zähne der Ausräumer gelangen. Die Zähne befördern daraufhin in ihrer Umlaufrichtung die Halmgutstängel aus den Fördertaschen der Förderscheibe heraus und bringen sie zu einem weiteren Fördermittel, das sie beispielsweise zum Häckselaggregat eines Feldhäckslers schafft.

Ein Nachteil dieses Schneidwerks ist, dass es durch die relativ großen Abmessungen der Ausräumer selbst in Fahrtrichtung gesehen weit nach vom ragt. In Verbindung mit dem außerdem noch zu verzeichnenden hohen Gewicht der Ausräumer kommt es dazu, dass dadurch die Achslast der Vorderachse einer das Schneidwerk tragenden Erntemaschine sehr hoch ist, was sich besonders negativ bei Transportfahrten auswirkt. Schließlich führen große Abmessungen und hoher Materialeinsatz grundsätzlich zu nicht akzeptablen hohen Herstellungskosten.

Eine dritte Möglichkeit für die konstruktive Gestaltung von Ausräumern für Schneid- und Fördervorrichtungen an Schneidwerken zur Ernte von Mais und diesem ähnlichen Halmgut ist in der DE 195 31 918 A1 gezeigt, deren Grundprinzip durch die Lösungen nach der DE 296 14 549 U1, der DE 297 02 902 U1 sowie der DE 298 20 638 U1 in Details variiert wurde. In diesem Schneidwerk sind beiderseits seiner Längsmittelebene und in Querausrichtung zu dieser zumindest zwei Schneid- und Fördervorrichtungen angeordnet, die um im wesentlichen vertikale Achsen rotieren. An ihren Unterteilen befinden sich rotierende Schneidscheiben, über denen in mehreren Ebenen übereinander koaxial zu den Schneidscheiben ausgerichtete antreibbare Förderscheiben drehbar gelagert sind. Auch diese Förderscheiben sind an ihrem Umfang wechselweise und im gleichen Abstand zueinander mit Förderzinken und Fördertaschen besetzt, wie das bei den beiden vorstehend beschriebenen Lösungen bereits ausreichend erläutert wurde. Die nahezu senkrecht ausgerichtete Rückwand des Schneidwerks folgt dem Rotationskreis der Spitzen der Förderzinken, so dass sie zusammen mit den Förderscheiben Förderkanäle zum Weitertransport der Halmgutstängel, in dem hier gezeigten Anwendungsfall bis zum Häckselaggeregat eines Feldhäckslers, bilden. Dadurch hat die Rückwand des Schneidwerks in der Draufsicht gesehen die Form einer sich ausbreitenden Welle, die sich in Querausrichtung zur Längsmittelebene des Schneidwerks bzw. auch des Feldhäckslers erstreckt. Im Zwickelbereich zwischen benachbarten Schneid- und Fördervorrichtungen, das heißt im Bereich der Wellenkämme und in Fahrtrichtung gesehen hinter der Rückwand des Schneidwerks, befindet sich je eine Querfördertrommel. Diese läuft um eine annähernd vertikal ausgerichtete Achse um und ist mit radial abstehenden Mitnehmern besetzt, die durch Schlitze in der Rückwand in die Förderkanäle für die Halmgutstängel eingreifen. Diese Querfördertrommeln haben einerseits die Aufgabe, im toten Bereich zwischen benachbarten Schneid- und

Fördervorrichtungen als Förderorgan zu arbeiten und zum anderen holen sie noch als Ausräumer wirkend die Halmgutstängel aus den Fördertaschen der Förderscheiben.

Da auch bei dieser Lösung ein hoher Materialeinsatz und ein großer Platzbedarf erforderlich ist, gelten die gleichen Nachteile wie bei dem Schneidwerk nach der DE 44 41 074 C2, so dass auf diese zur Vermeidung von Wiederholungen hier nur verwiesen wird. Ein weiterer Kosten erhöhender Faktor in der Herstellung kommt noch durch die komplizierte Gestalt der Rückwand des Schneidwerks hinzu.

Schließlich ist noch eine vierte mit der DE 91 09 490 U1 bekannt gewordene Ausführungsvariante eines Schneidwerks mit Schneid- und Fördervorrichtungen und mit diesen zusammenwirkenden Ausräumern zu erwähnen, die bezüglich des Aufbaus der Schneid- und Fördervorrichtungen mit allen vorstehend beschriebenen Lösungen prinzipiell übereinstimmt. Die Ausräumer werden hier von Umschlingungstrieben in Form von Kettentrieben gebildet, die den äußeren Umfang der zylinderförmigen Fördertrommeln in einem Winkelbereich von etwa 250 Grad umschlingen und außerhalb des Rotationskreises der Fördervorrichtungen um Umlenkscheiben geführt sind. Die Kettentriebe weisen eine Vielzahl von nach außen abstehenden Räumfingern auf, wobei jedes zweite Kettenglied mit einem derartigen radial abstehenden Räumfinger einstückig ausgebildet ist. Deren radiale Erstreckung ist etwa halb so lang wie die der Förderzinken. Im Bereich der Abgabestellen der Schneid- und Fördervorrichtungen laufen die Kettentriebe vom Umfang der zylinderförmigen Fördertrommeln ab, um mit ihren Räumfingern die Halmgutstängel aus den Fördertaschen der Fördervorrichtungen heraus zu holen. Nach einer sich daran anschließenden Beförderung über eine kurze Zwischenförderstrecke übergeben die Räumfinger im Bereich der Umlenkscheiben der Kettentriebe die Halmgutstängel entweder direkt an das Häckselaggregat eines Feldhäckslers oder an eine in das Schneidwerk integrierte Querförderschnecke. Nach den Umlenkscheiben laufen die Kettentriebe erneut auf den Umfang der zylinderförmigen Fördertrommeln im Grund der Fördertaschen auf und sorgen durch ihre Umschlingung der Fördertrommeln gleichzeitig für deren Antrieb.

An diesem Schneidwerk ist einmal zu bemängeln, dass die Funktion des Ausräumens durch die zu geringe Umlaufgeschwindigkeit der Kettentriebe und damit auch der Räumfinger beeinträchtigt ist, weil durch die Umschlingung der Fördertrommeln durch die Kettentriebe beide Umlaufgeschwindigkeiten nur gleich groß sein können. Zum anderen verkleinern die Räumfinger im gesamten Umschlingungsbereich das Aufnahmevermögen der Fördertaschen wenigstens auf die Hälfte, so dass diese gar nicht mehr in der Lage sind, alle Halmgutstängel aufzunehmen. Damit ist dieses Schneidwerk praktisch funktionsunfähig, was durch die Tatsache bewiesen ist, dass diese Lösung niemals die Serienreife erreicht hat. Ein weiterer Mangel sind die langen Kettentriebe, weil sie die Herstellungskosten und den Wartungsaufwand erhöhen.

Deshalb liegt der Erfindung die Aufgabe zugrunde, einen Ausräumer für die Schneid- und Fördervorrichtungen eines Schneidwerks zu schaffen, der weder auf die konstruktive Ausbildung anderer Bauteile im Schneidwerk noch auf deren Funktion einen negativen Einfluss ausübt, der wenig Bauraum beansprucht, der ein geringes Gewicht aufweist und dessen Herstellungskosten gering sind. Diese Aufgabe wird gemäß der Erfindung mit den Merkmalen nach dem Patentanspruch 1 gelöst, wobei in den Unteransprüchen Merkmale aufgeführt sind, die diese Lösung in vorteilhafter Weise weiterentwickeln.

Durch den sich im Bereich der Abgabestelle der Halmgutstängel annähernd in die Rotationsrichtung der Schneid- und Fördervorrichtung bewegenden Umschlingungstrieb räumen die an ihm befestigten radial abstehenden Mitnehmer die Fördertaschen in den Förderscheiben nach einem klar definierten und sich für die nachfolgenden Fördertaschen genau so wiederholenden Bewegungsablauf aus. Dabei wird durch die erfindungsgemäße Anordnung der inneren und äußeren Umlenkscheiben, ihre relativ kleinen Wirkdurchmesser, den exakt festgelegten Abstand zwischen benachbarten Mitnehmern auf dem Umschlingungstrieb und die Abstimmung der Umlaufgeschwindigkeiten zwischen dem Umschlingungstrieb und der Förderscheiben erreicht, dass die Mitnehmer in den Grund der Fördertaschen eintreten und durch ihre größere Geschwindigkeit gegenüber den Förderscheiben sich bis zu deren Öffnung hin bewegen und damit das Ausräumen ausführen. Sie befinden sich auf diesem Weg in einer Ausrichtung quer zu ihrer Bewegungsrichtung und füllen dabei zumindest weitestgehend oder besser ganz die gesamte Breite der Fördertaschen aus.

Die vorstehend genannte größere Geschwindigkeit der Mitnehmer an dieser Stelle ist nur deshalb möglich, weil die sich in einer Rotationsbewegung um den kleinen Wirkdurchmesser der inneren Umlenkscheibe herum befinden. Bereits während des Ausräumens geht diese anfängliche Rotationsbewegung wieder in eine langsamere geradlinige Bewegung über. Damit sich dieser Bewegungsablauf auch zwischen allen Mitnehmern und Fördertaschen gleichermaßen wiederholt, ist ein festes Übersetzungsverhältnis zwischen ihnen eine zwingende Voraussetzung.

In einer zweckmäßigen Ausgestaltung der Erfindung nach dem Unteranspruch 2 hat der Wirkdurchmesser der inneren Umlenkscheibe lediglich eine Größe von einem Achtel bis zu einem Neuntel des Rotationskreises der Förderscheiben, weil nur durch eine so starke Umlenkung eine ausreichend höhere Rotationsgeschwindigkeit der Mitnehmer gegenüber den Fördertaschen an der Abgabestelle der Halmgutstängel realisiert werden kann.

Um die Mitnehmer auf ihrem Weg durch die Fördertaschen in einer Ausrichtung quer zu ihrer Bewegungsbahn zu halten, hat es sich in einer Ausführung nach dem Unteranspruch 3 bewährt, die äußere Umlenkscheibe für den Umschlingungstrieb so zu platzieren, dass der Winkel zwischen einer durch die Rotationsachse der inneren Umlenkscheibe und die vertikale Achse der Förderscheiben gelegten Gerade und dem die Halmgutstängel ausräumenden Trum des Umschlingungstriebs zwischen 90 und 100 Grad groß ist.

Schließlich ist eine bevorzugte Ausgestaltung der Erfindung nach dem Unteranspruch 4 darin zu sehen, dass an der Oberseite und der Unterseite der äußeren Umlenkscheibe drehfest mit ihr verbundene Räumsterne anbracht sind, deren Wirkradius größer als der Aktionsradius der Mitnehmer beim Rotieren um die äußere Umlenkscheibe ist. Damit wird der Weitertransport der Halmgutstängel entweder an die Einzugsorgane eines Feldhäckslers oder an eine rückwärtig im Schneidwerk angebrachte Querförderschnecke begünstigt.

An dieser Stelle wird vorsorglich zum beanspruchten Schutzumfang der Erfindung darauf hingewiesen, dass sämtliche denkbaren Ausführungsvarianten von Umschlingungstrieben darunter fallen. Das können beispielsweise Ketten, Riemen, Bänder etc. sein. Dabei ist es auch völlig unerheblich, ob ein oder mehrere Umschlingungstriebe übereinander angeordnet sind. Dem Schutzumfang dieser Erfindung sind auch alle die Schneidwerke zuzurechnen, die aus mehr als einer Schneid- und Fördervorrichtung bestehen und wenigstens einen erfindungsgemäßen Ausräumer besitzen. Ebenso ist der Schutzumfang in keiner Weise an den konstruktiven Aufbau der hier beschriebenen Schneid- und Fördervorrichtung gebunden.

Damit ergeben sich zusammengefasst als Vorteile für derartige Ausräumer, dass sie durch den Ort ihrer Anbringung weder das Schneidverhalten noch das Weiterbefördern der Halmgutstängel im Schneidwerk behindern. Sie beeinflussen auch in keiner Weise die konstruktive Gestaltung anderer Bauteile im Schneidwerk. Sie beanspruchen so wenig Bauraum und haben dazu noch ein so geringes Gewicht, dass sie den konzeptionellen Aufbau eines Schneidwerks praktisch nicht beeinflussen. Letzteres ist auch der ausschlaggebende Grund dafür, dass die Herstellungskosten für derartige Ausräumer gering sind.

Die Erfindung soll nun anhand eines Ausführungsbeispieles näher erläutert werden, wobei die einzelnen Figuren zeigen:
- Fig. 1:: eine Draufsicht auf ein Schneidwerk mit vier Schneid- und Fördervorrichtungen und Ausräumern
- Fig. 2:: ein vergrößerter Ausschnitt aus dem vorderen Bereich einer Schneid- und Fördervorrichtung nach Fig. 1

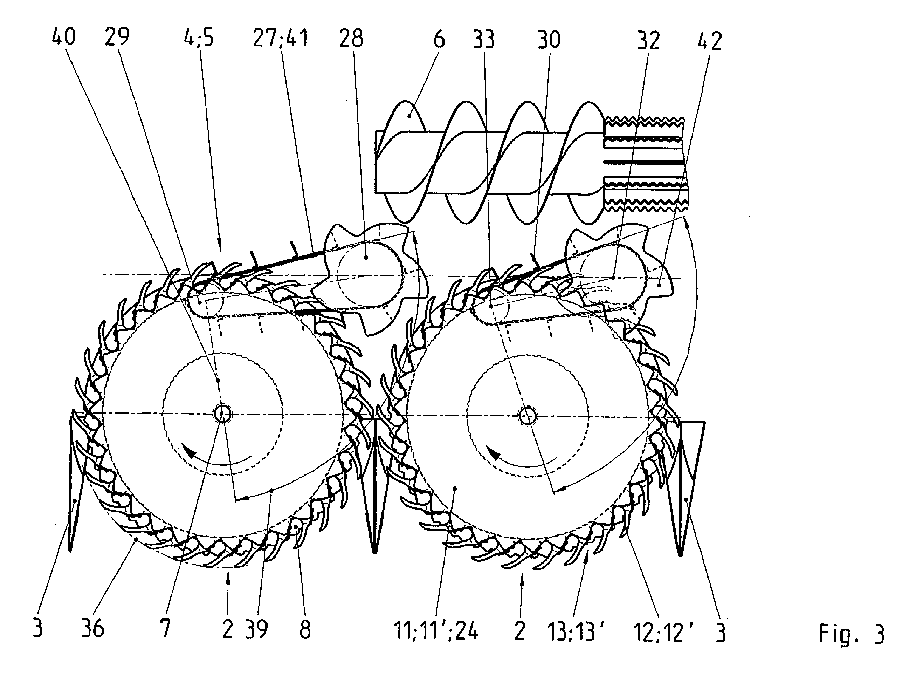

- Fig. 3:: eine Draufsicht auf die rechte Hälfte des Schneidwerks nach Fig. 1 ohne obere Abdeckung
- Fig. 4:: eine vereinfachte Seitenansicht "A" auf das Schneidwerk nach Fig. 1.

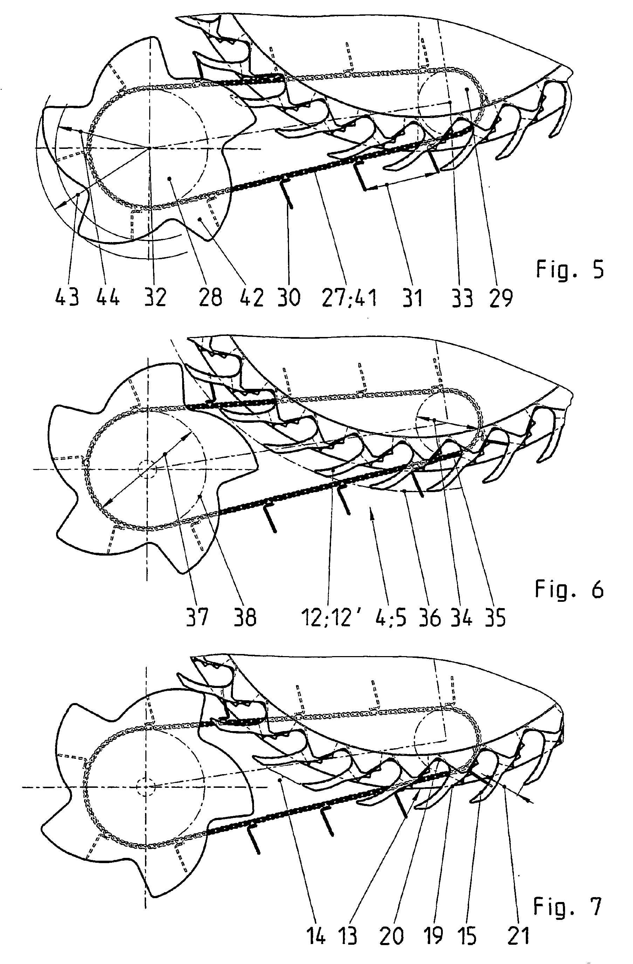

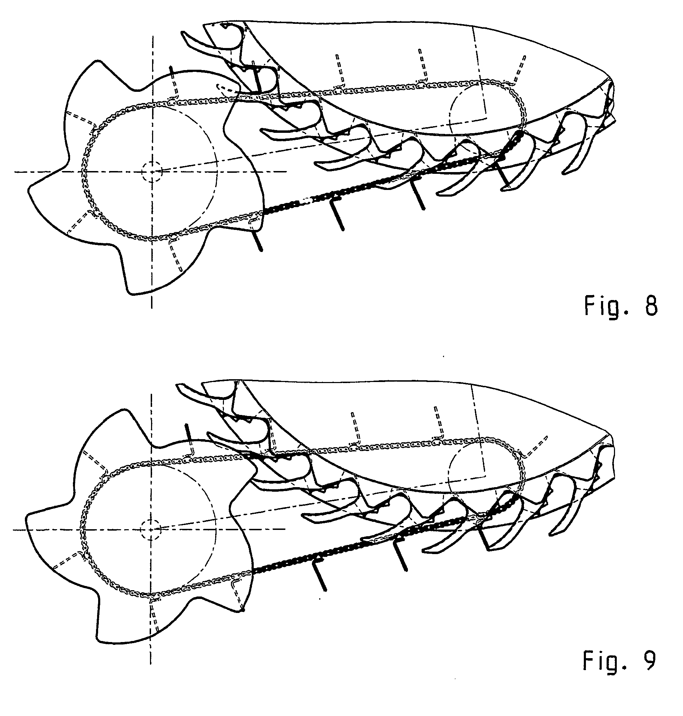

- Fig. 5 bis 9:: Augenblicksdarstellungen des Bewegungsablaufs von den Mitnehmern in den Fördertaschen, unterteilt in fünf gleich große Zeitabschnitte.

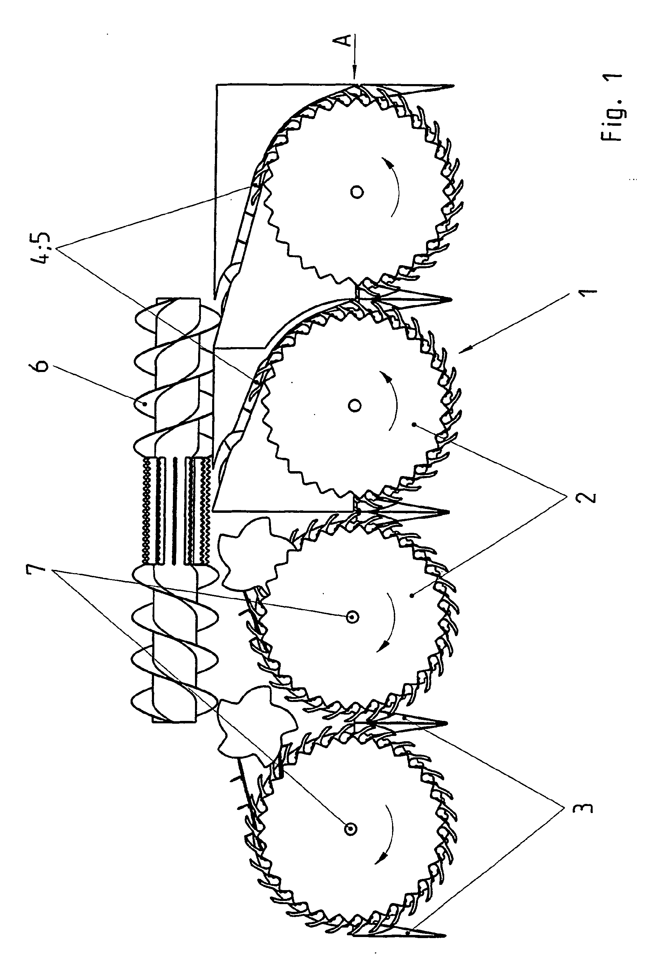

In Figur 1 ist ein Schneidwerk 1 zur reihenunabhängigen Ernte von Mais gezeigt, das in diesem Ausführungsbeispiel aus vier nebeneinander angeordneten und quer zur Fahrtrichtung eines nicht dargestellten Feldhäckslers ausgerichteten Schneid- und Fördervorrichtungen 2 besteht. Zwischen ihnen und am linken und rechten Rand des Schneidwerks 1 sind herkömmliche Halmteiler 3 angebracht. Im Bereich der Abgabestellen 4 für die Halmgutstängel aus den Schneid- und Fördervorrichtungen 2 befinden sich Ausräumer 5, auf deren Aufbau später näher eingegangen wird. In Fahrtrichtung gesehen hinter den Ausräumern 5 ist eine Querförderschnecke 6 zum Zusammenführen der Halmgutstängel zur Mitte des Schneidwerks 1 und zu dessen Weiterleitung an einen nicht dargestellten Feldhäcksler angeordnet.

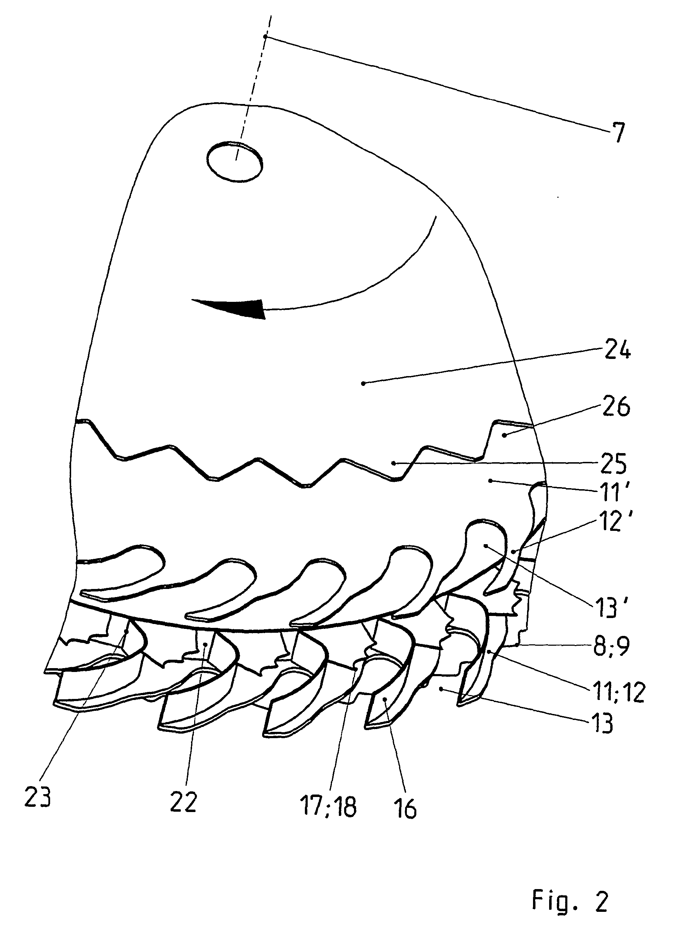

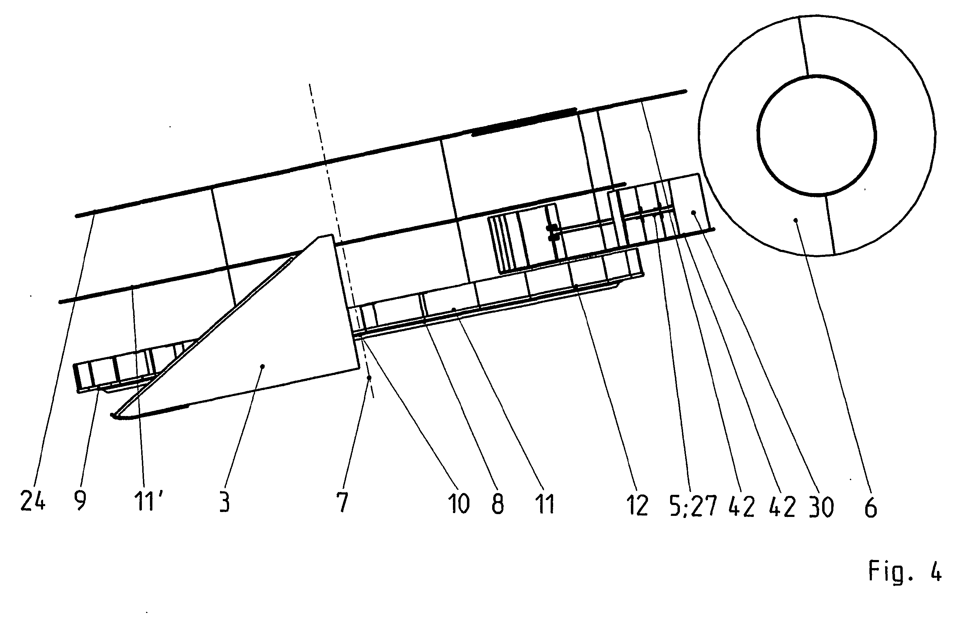

Alle Schneid- und Fördervorrichtungen 2 rotieren um annähernd vertikal ausgerichtete Achsen 7, wobei die beiden Schneid- und Fördervorrichtungen 2 in der linken Schneidwerkshälfte und die in der rechten Schneidwerkshälfte die gleiche Drehrichtung haben, zueinander aber entgegengesetzt ausgerichtet sind. Der konstruktive Aufbau der Schneid- und Fördervorrichtungen 2 ist im Detail am besten in den Figuren 2 und 4 zu sehen. Sie sind alle von unten nach oben gesehen grundsätzlich gleich aufgebaut. Der einzige Unterschied zwischen den in der linken und den in der rechten Schneidwerkshälfte angeordneten Schneid- und Fördervorrichtungen 2 besteht in deren spiegelbildlicher Gestaltung. Ganz unten befindet sich eine kreisförmige Schneidscheibe 8, deren Schneide 9 eine profilierte bzw. eine sägezahnartige Kontur aufweist und die in einer annähernd horizontalen Ebene am Rahmen des Schneidwerks 1 lagefixiert befestigt ist.

Durch deren Mittelpunkt 10 erstreckt sich im rechten Winkel zur Schneidscheibe 8 die annähernd vertikal ausgerichtete Achse 7.

Direkt über der Schneidscheibe 8 und im Abstand eines Schneidspaltes zu ihr ist eine untere Förderscheibe 11 angeordnet, die um den Mittelpunkt 10 der Schneidscheibe 8 drehbar aufgehängt ist. An deren Umfang befinden sich gleichmäßig verteilte Förderzinken 12, die als sogenannte Greifschneiden ausgebildet sind und die den Außendurchmesser der Schneidscheibe 8 überragen. Die Räume zwischen benachbarten Greifschneiden fungieren als Fördertaschen 13 zur Aufnahme der abgeschnittenen Halmgutstängel. Die relativ langen und schlanken Greifschneiden weisen so in die Drehrichtung der unteren Förderscheibe 11, dass sie in radialer Richtung der unteren Förderscheibe 11 gesehen die auf ihre Drehrichtung bezogenen jeweils vor ihnen liegenden Fördertaschen 13 verdecken. Die Öffnungen 14 der Fördertaschen 13 zeigen dabei etwa in Drehrichtung der unteren Förderscheibe 11.

Auf den fördernden Flanken 15 der Greifschneiden sind aufrecht stehende Bleche 16 befestigt, so dass sie den Konturen der Fördertaschen 13 in diesem Abschnitt folgen. Schließlich sind entlang der Oberkante der aufrecht stehenden Bleche 16 parallel zur Schneidscheibe 8 ausgerichtete Hakenbleche 17 so angebracht, dass deren mit Haken 18 besetzte Kanten den Konturen der nicht fördernden Flanken 19 der Greifschneiden im Bereich vom Grund 20 der Fördertaschen 13 bis etwa zur Schneide 9 der Schneidscheibe 8 reichend folgen. Der Abstand zwischen den fördernden Flanken 15 und den nicht fördernden Flanken 19 einer jeden Fördertasche 13 verkörpert deren Breite 21.

Am Grund 20 der Fördertaschen 13 der unteren Förderscheibe 11 ist noch ein auf dieser aufrecht stehender zylinderförmiger Mantel 22 angeordnet, dessen Radius bis zu den inneren Kanten 23 der Bleche 16 reicht, der sich in der Höhe wenigstens bis zur Oberkante der Bleche 16 erstreckt und der in seiner oberen Ebene geschlossen ist.

In einem deutlich sichtbaren Abstand über der unteren Förderscheibe 11 befindet sich eine koaxial zu ihr angeordnete und gemeinsam mit ihr rotierende weitere Förderscheibe 11', deren Förderzinken 12' und Fördertaschen 13' in der Kontur und in der Anordnung mit den als Greifschneiden ausgebildeten Förderzinken 12 und den Fördertaschen 13 der unteren Förderscheibe 11 ganz bzw. weitestgehend übereinstimmen.

In einem weiteren Abstand über der Förderscheibe 11' ist eine koaxial zu dieser angeordnete und gemeinsam mit ihr rotierende dritte obere Förderscheibe 24 angebracht, die gleichmäßig an ihrem Umfang verteilte Mitnehmer 25 und dazwischen liegende Fördertaschen 26 aufweist. Die Anzahl der Mitnehmer 25 ist genau so groß wie die Anzahl der Förderzinken 12' in der Förderscheibe 11' und die der als Greifschneiden ausgebildeten Förderzinken 12. Sie unterscheiden sich jedoch von diesen in der Kontur, da sie trapezförmig ausgebildet sind.

Der eingangs bereits erwähnte Ausräumer 5 befindet sich in diesem Ausführungsbeispiel im Raum zwischen der oberen Abdeckung des zylinderförmigen Mantels 22 auf der unteren Förderscheibe 11 und der darüberliegenden Förderscheibe 11'. Es handelt sich dabei um einen Umschlingungstrieb 27, der um eine äußere Umlenkscheibe 28 und eine innere Umlenkscheibe 29 geführt ist. Er ist mit etwa rechtwinklig nach außen abstehenden Mitnehmern 30 besetzt, die untereinander alle den gleichen Abstand 31 haben. Die Rotationsachse 32 der äußeren Umlenkscheibe 28 und die Rotationsachse 33 der inneren Umlenkscheibe 29 sind beide zur annähernd vertikalen Achsen 7 der Schneid- und Fördervorrichtung 2 parallel ausgerichtet.

Der durch ihren Wirkdurchmesser 34 festgelegte Mantel 35 der inneren Umlenkscheibe 29 befindet sich innerhalb und ganz in der Nähe des von den Spitzen der Förderzinken 12;12' beschriebenen Rotationskreises 36. Dagegen liegt der durch den Wirkdurchmesser 37 festgelegte Mantel 38 der äußeren Umlenkscheibe 28 zumindest weitgehend außerhalb des Rotationskreises 36, wobei es bei deren Abstand voneinander einen größeren Spielraum als bei der inneren Umlenkscheibe 29 gibt. Obwohl beide Wirkdurchmesser 34 und 37 in der Größe etwas voneinander abweichen können, sind sie doch deutlich kleiner als der Rotationskreis 36 der Förderscheiben 11,11'. Von besonderer Bedeutung ist der Wirkdurchmesser 34 der inneren Umlenkscheibe 29, der im Bereich von einem Achtel bis zu einem Neuntel vom Rotationskreis 36 liegen sollte. Eine optimale Anordnung des Umschlingungstriebs 27 zur Schneid- und Fördervorrichtung 2 ist dann gegeben, wenn der Winkel 39 zwischen einer durch die Rotationsachse 33 der inneren Umlenkscheibe 29 und die vertikale Achse 7 der Förderscheiben 11,11' und 24 gelegten Gerade 40 und dem die Halmgutstängel ausräumenden Trum 41 des Umschlingungstriebs 27 zwischen 90 und 100 Grad groß ist.

Die äußere Umlenkscheibe 28 ist oberhalb und unterhalb des Umschlingungstriebs 27 fest mit Räumsternen 42 verbunden, deren Wirkradius 43 größer als der Aktionsradius 44 der Mitnehmer 30 ist.

## Patentansprüche

1. Ausräumer für die Schneid- und Fördervorrichtung für ein reihenunabhängig arbeitendes Schneidwerk für stängeliges Halmgut, insbesondere Mais, bestehend aus einem mit Mitnehmern besetzten und sich im Bereich der Abgabestelle der Halmgutstängel annähernd in die Rotationsrichtung der Schneid- und Fördervorrichtung bewegenden Umschlingungstrieb, wobei die Schneid- und Fördervorrichtung aus einer unteren Schneidscheibe und mehreren darüber in koaxialer Ausrichtung zu dieser angeordneten und um eine annähernd vertikal ausgerichtete Achse rotierenden Förderscheiben besteht, die an ihrem äußeren Umfang mit Förderzinken und Fördertaschen besetzt sind,
**dadurch gekennzeichnet, dass**
a) der Umschlingungstrieb (27) um eine innere Umlenkscheibe (29) und um eine äußere Umlenkscheibe (28) geführt ist, deren Rotationsachsen (32;33) parallel zu den annähernd vertikalen Achsen (7) der rotierenden Förderscheiben (11;11';24) ausgerichtet sind,
b) sich der durch ihren Wirkdurchmesser (34) bestimmte Mantel (35) der inneren Umlenkscheibe (29) innerhalb und in der Nähe des Rotationskreises (36) der Förderscheiben (11;11';24) befindet und der durch den Wirkdurchmesser (37) bestimmte Mantel (38) der äußeren Umlenkscheibe (28) zumindest weitgehend außerhalb,
c) die Wirkdurchmesser (34;37) der inneren Umlenkscheibe (29) und der äußeren Umlenkscheibe (28) deutlich kleiner als der Rotationskreis (36) der Förderscheiben (11;11';24) sind,
d) die Anordnung der inneren Umlenkscheibe (29) zur äußeren Umlenkscheibe (28), die Größe ihrer Wirkdurchmesser (34;37), der Abstand (31) zwischen benachbarten Mitnehmern (30) auf dem Umschlingungstrieb (27) und die Umlaufgeschwindigkeiten des Umschlingungstriebs (27) sowie der Förderscheiben (11;11';24) so aufeinander abgestimmt sind, dass sich die Mitnehmer (30) von ihrem Eintritt in den Grund (20) einer Fördertasche (13;13') und in der sich auf ihre Öffnung (14) zu bewegenden Phase in einer Ausrichtung quer zu dieser Bewegungsrichtung und dabei zumindest weitestgehend die Breite (21) der Fördertasche (13;13') ausfüllend befinden,
e) die auf dem Umschlingungstrieb (27) nebeneinander angebrachten Mitnehmer (30) für das Ausräumen benachbarter Fördertaschen (13;13') bei gleichem Bewegungsablauf vorgesehen sind.

2. Ausräumer nach Anspruch 1, **dadurch gekennzeichnet, dass** der Wirkdurchmesser (34) der inneren Umlenkscheibe (29) in der Größenordnung von einem Achtel bis zu einem Neuntel vom Rotationskreis (36) der Förderscheiben (11;11') liegt.

3. Ausräumer nach den Ansprüchen 1 und 2, **dadurch gekennzeichnet, dass** der Winkel (39) zwischen einer durch die Rotationsachse (33) der inneren Umlenkscheibe (29) und die vertikale Achse (7) der Förderscheiben (11;11') gelegten Gerade (40) und dem die Halmgutstängel ausräumenden Trum (41) des Umschlingungstriebs (27) zwischen 90 und 100 Grad liegt.

4. Ausräumer nach den Ansprüchen 1 bis 3, **dadurch gekennzeichnet, dass** auf der Rotationsachse (32) der äußeren Umlenkscheibe (28) fest mit ihr verbundene Räumsterne (42) oberhalb und/oder unterhalb des Umschlingungstriebs (27) angeordnet sind, deren Wirkradius (43) größer als der Aktionsradius (44) der Mitnehmer (30) ist.

## Claims

1. Stripper for the cutting and transporting device for a cutter head working independently of rows for stalked feedstuff, particularly maize, consisting of a looped drive fitted with dogs moving in the approximate direction of rotation of the cutting and transporting device in the vicinity of the discharge point of the feedstuff stalks, the cutting and transporting device consisting of a lower cutting disc and several transport discs above it, coaxially aligned with it and rotating about an approximately vertically-aligned axis, the outer circumference of which is fitted with transport prongs and transport pockets **characterised in that**
a) the looped drive (27), which is fed around an outer idler disc (29) and an inner idler disc (28). the axes of rotation (32; 33) of which are aligned in parallel to the approximately vertical axes (7) of the rotating transport discs (11; 11'; 24);
b) the shroud (35) of the inner idler disc (29) defined by its effective diameter (34) is located within and in the vicinity of the circle of rotation (36) of the transport discs (11; 11'; 24) and the shroud (38) of the outer idler disc (28) defined by the effective diameter (37) is at least largely outside it;
c) the effective diameters (34;37) of the inner idler disc (29) and the outer idler disc (28) are significantly smaller than the circle of rotation (36) of the transport discs (11; 11'; 24);
d) the inventive arrangement of the inner idler disc (29) in respect of the outer idler disc (28), the size of its effective diameter (34; 37), the distance (31) between adjacent dogs (30) on the looped drive (27) and the peripheral speeds of the looped drive (27) and the transport discs (11; 11'; 24) are matched to each other so that the dogs (30) are located in an alignment at right angles to this direction of rotation, at least largely filling the width (21) of the transport pocket (13; 13') prior to entering the base (20) of a transport pocket (13; 13') and in the phase moving towards its aperture (14);
e) the dogs (30) fitted adjacent to each other on the looped drive (27) for stripping adjacent transport pockets (13; 13') are provided with the same movement sequence.

2. Stripper in accordance with claim 1, **characterised in that** the effective diameter (34) of the inner idler disc (29) is in the range of one eighth to one tenth of the circle of rotation (36) of the transport discs (11; 11').

3. Stripper in accordance with claims 1 and 2, **characterised in that** the angle (39) between a straight line (40) passing between the axis of rotation (33) of the inner idler disc (29), the vertical axis (7) of the transport discs (11, 11') and the branch (41) of the looped drive (27) stripping the feedstuff stalks is between 90 and 100 degrees.

4. Stripper in accordance with claims 1 to 3, **characterised in that** stripping star wheels (42) permanently connected to the outer idler disc (28) are located on its axis of rotation (32) above and/or below the looped drive (27), the effective radius (43) of which stripping star wheels (42) is greater than the active radius (44) of the dogs (30).

## Revendications

1. Dispositif d'extraction pour le dispositif de coupe et de transport d'une barre de coupe travaillant indépendamment des lignes pour des céréales sur pied, en particulier du maïs, comportant une commande d'enroulement occupée par des entraîneurs et s'étendant dans le domaine du point de distribution des tiges des céréales à peu près dans le sens de rotation du dispositif de coupe et de transport, le dispositif de coupe et de transport étant constitué d'un disque de coupe inférieur et de plusieurs dispositifs de transport disposés au-dessus en alignement coaxial par rapport à lui et tournant autour d'un axe aligné à peu près verticalement, qui sont occupés sur leur périphérie extérieure par des dents de transport et des poches de transport, **caractérisé en ce que :**
a) la commande d'enroulement (27) est conduite autour d'une poulie de renvoi intérieure (29) et d'un poulie de renvoi extérieure (28), dont les axes de rotation (32 ;33) sont alignés parallèlement aux axes (7) à peu près verticaux des disques de transport en rotation (11 ;11' ;24),
b) l'enveloppe (35) définie par leur diamètre effectif (34) de la poulie de renvoi intérieure (29) se trouve à l'intérieur et à proximité du cercle de rotation (36) des disques de transport (11 ;11' ;24) et l'enveloppe (38) de la poulie de renvoi extérieure (28) définie par le diamètre effectif (37) se trouve au moins largement à l'extérieur.
c) les diamètres effectifs (34 ;37) du disque d'enroulement intérieur (29) et du disque d'enroulement extérieur (28) sont nettement plus réduits que le cercle de rotation (36) des disques de transport (11 ;11' ;24),
d) l'agencement de la poulie de renvoi intérieure (29) par rapport à la poulie de renvoi extérieure (28), la grandeur de leur diamètre effectif (34 ;37) la distance (31) entre entraîneurs voisins (30) sur la commande d'enroulement (27) et les vitesses de rotation de la commande d'enroulement (27), de même que des disques de transport (11 ;11' ;24) sont ajustés l'un par rapport à l'autre de manière à ce que les entraîneurs (30) depuis leur entrée dans le fond (20) d'une poche de transport (13 ;13') et au cours de la phase de déplacement au niveau de leur ouverture (14) se trouve dans un agencement transversal par rapport à cette direction de déplacement et ce faisant, couvrent au moins largement la largeur (21) de la poche de transport (13 ;13').
e) les entraîneurs (30) disposés l'un à coté de l'autre sur la commande d'enroulement (27) pour l'extraction de poches de transport voisines (13 ;13') sont prévus pour un déroulement du mouvement comparable.

2. Dispositif d'extraction selon la revendication 1, **caractérisé en ce que** le diamètre effectif (34) de la poulie de renvoi intérieure (29) se situe dans un ordre de grandeur d' un huitième à un neuvième du cercle de rotation (36) des disques de transport (11,11').

3. Dispositif d'extraction selon les revendications 1 et 2, **caractérisé en ce que** l'angle (39) défini entre une droite passant par l'axe de rotation (33) de la poulie de renvoi inférieure (29) et l'axe vertical (7) des disques de transport (11,11') et le brin d'extraction des tiges des céréales (41) de la commande d'enroulement est compris entre 90 et 100 degrés.

4. Dispositif d'extraction selon les revendications 1 à 3, **caractérisé en ce que** sur l'axe de rotation (32) de la poulie de renvoi extérieure (28), des étoiles d'extraction (42) fixées de manière stable dessus sont disposées au-dessus et/ou au-dessous de la commande d'enroulement (27) dont le rayon effectif (43) est supérieur que rayon d'action (44) des entraîneurs (30).
